# EUROPEAN PATENT SPECIFICATION

(11) **EP 4 310 122 B1**
(45) Date of publication and mention of the grant of the patent: **05.06.2024**
(21) Application number: 23186320.0
(22) Date of filing: 19.07.2023
(51) Int. Cl.: C08G 59/02

(54) **PREPARATION METHOD AND APPLICATION OF LOW-CHLORINE EPOXY RESIN**
HERSTELLUNGSVERFAHREN UND ANWENDUNG VON CHLORARMEM EPOXIDHARZ
PROCÉDÉ DE PRÉPARATION ET APPLICATION DE RÉSINE ÉPOXY À FAIBLE TENEUR EN CHLORE

(30) Priority: 20.07.2022 CN 202210858463
(43) Date of publication of application: 24.01.2024
(73) Proprietor: Zillion New Material Technology (Xi'an) Co., Ltd., Xi'an City Shaanxi 710000 (CN)
(72) Inventor: DU, Biao, Xi'an City, 710000 (CN)
(74) Representative: V.O.

(56) References cited:
- JP-A- H11 349 661
- JP-A- 2013 095 916

## Description

### FIELD OF THE PRESENT DISCLOSURE

The present application relates to the technical field of epoxy resins, and more particularly, to a method for preparation of a low-chlorine epoxy resin and the use of so-prepared low-chlorine epoxy resin in a copper-clad plate.

### BACKGROUND OF THE PRESENT DISCLOSURE

Epoxy resins are widely used in various fields of the national economy due to their excellent physical and mechanical properties, chemical stability, chemical resistance, heat resistance and adhesiveness.

Chlorine residues are inevitable during the synthesis of epoxy resins. In the electronic industries, such as in copper-clad plates, photoresist, and chip adhesives, the total chlorine content of the epoxy resin is required to be 800 ppm or less, but is required to be rather lower, especially in the high-end electronics industry, aerospace and other fields. Therefore, chlorine impurities in epoxy resins need to be removed to meet the demands of the electronics industry.

JP 2013-095916 A discloses a method for removing chlorine impurities from epoxy resins which involves providing a solution of the crude epoxy resin in a keto group-containing solvent and then adding metal alkoxide compound thereto.
JP H11-349661 A also discloses a method of manufacturing an epoxy resin having a low hydrolysable chlorine content. The multi-stage method involves dissolving an epoxy resin containing chlorine impurity in an aprotic polar solvent and adding an alkaline substance such as, e.g., sodium hydroxide, thereto. Thereafter, the aprotic polar solvent is, e.g., distilled off and replaced/substituted by an organic solvent other than said aprotic polar solvent and then an aqueous solution of an alkaline substance is added thereto. After neutralization; removal of water by azeotropic dehydration; and removal of inorganics by filtration, the organic solvent is distilled off to provide the purified epoxy resin.

The conventional methods for removing chlorine from epoxy resins mainly include a multi-stage distillation method and a method for removing chlorine by chemical agents. The multi-stage distillation method consumes more energy, resulting in high cost. The method for removing chlorine by chemical agents can only remove part of inorganic chlorine, but is difficult to remove organic chlorine.

### SUMMARY OF THE PRESENT DISCLOSURE

In order to solve the problem of high chlorine content in epoxy resins, the present invention provides a method for preparation of a low-chlorine epoxy resin, and the use of so-prepared low-chlorine epoxy resin in a copper-clad plate, as defined in the appended claims.

In accordance with an aspect of the present invention, a method is provided for the preparation of a low-chlorine epoxy resin, the method including:
performing an aldol condensation reaction of a bisphenol A epoxy resin containing chlorine impurities and a polyfluoroalkyl aldehyde under a first preset reaction condition to obtain a reaction product;
adding a perfluoroalkane solution to the reaction product for extraction, standing and then separating to obtain an extract phase and a raffinate phase, the extract phase including a fluorine-containing chlorinated product generated by the aldol condensation reaction of the bisphenol A epoxy resin containing chlorine impurities and polyfluoroalkyl aldehyde, the raffinate phase including a low-chlorine bisphenol A epoxy resin; and
separating the extract phase from the raffinate phase, so as to achieve the purpose of separating the fluorine-containing chlorinated product from a chlorine-free bisphenol A epoxy resin, thereby obtaining the low-chlorine bisphenol A epoxy resin, wherein the chlorine content of the low-chlorine bisphenol A epoxy resin is lower than that of the bisphenol A epoxy resin before reaction.

In some embodiments, the perfluoroalkane is perfluoropentane, perfluorohexane or perfluorooctane.

In some embodiments, the polyfluoroalkyl aldehyde is perfluorohexyl aldehyde, or perfluorooctyl aldehyde.

In some embodiments, the molar ratio of the bisphenol A epoxy resin to the polyfluoroalkyl aldehyde is 1: (2.1 to 2.3).

In some embodiments, the first preset reaction condition includes: a reaction temperature of 30°C to 45°C, a reaction time of 2 to 3 hours, and a pH of the reaction solution during the reaction process of greater than 7.

In some embodiments, prior to the aldol condensation reaction of the bisphenol A epoxy resin containing chlorine impurities and the polyfluoroalkyl aldehyde, the method further includes:
mixing the bisphenol A epoxy resin containing chlorine impurities with the polyfluoroalkyl aldehyde homogeneously, and dissolving the mixture in cyclohexane.

In some embodiments, a reaction principle of the aldol condensation reaction of the bisphenol A epoxy resin containing chlorine impurities and the polyfluoroalkyl aldehyde to provide the fluorine-containing chlorinated product is as follows:

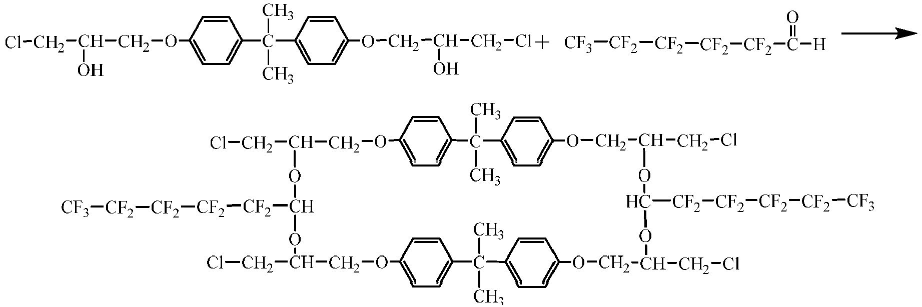

Another aspect of the present invention provides the use of a low-chlorine epoxy resin prepared in accordance with the method of the present invention in a copper-clad plate.

The method of the present invention has the following beneficial effects: a hydroxyl group in the bisphenol A epoxy resin containing chlorine impurities undergoes an aldol condensation reaction with an aldehyde group in a perfluoroalkyl aldehyde to generate the fluorine-containing chlorinated product; further, due to the great difference in solubility between the fluorine-containing chlorinated product and the low-chlorine epoxy resin, a perfluoroalkane is thus selected as an extraction agent, only the fluorine-containing chlorinated product can be dissolved in the perfluoroalkane, and the extract phase is separated from the raffinate phase, so as to achieve the purpose of separating the fluorine-containing chlorinated product from the chlorine-free bisphenol A epoxy resin, thereby obtaining the low-chlorine bisphenol A epoxy resin.

The method of the present invention has the characteristics of low cost, easy operation and high separation efficiency. The chlorine content of the low-chlorine bisphenol A epoxy resin prepared in accordance with the method of the present invention is less than 150 ppm.

### BRIEF DESCRIPTION OF THE DRAWINGS

To describe the examples of the present invention or the technical solutions set forth in the prior art more clearly, the accompanying drawing is briefly introduced as follows. The accompanying drawing, as detailed in the following description, merely illustrates an example of an embodiment underlying the present invention.

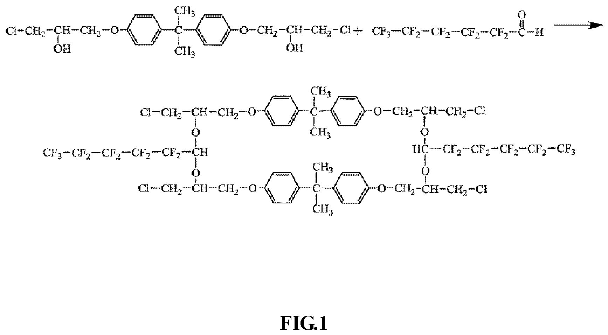

Fig. 1 is a diagram of a reaction principle of an aldol condensation reaction of a bisphenol A epoxy resin containing chlorine impurities and perfluorohexyl aldehyde as provided by an embodiment of the method of the present invention.

### DESCRIPTION OF THE EMBODIMENTS

In order to make the objectives, embodiments and advantages of the present invention more clear, exemplary embodiments of the present invention will be described clearly and completely in conjunction with the accompanying drawing in the herein below exemplary examples of the present invention, which exemplary examples are by no means exhaustive.

It should be noted that the brief description of terms in the present application is only to facilitate the understanding of the embodiments described below, and is not intended to limit the embodiments of the present invention. Unless otherwise indicated, these terms shall be understood to have their common and ordinary meanings.

The technical solution provided by the method of the present invention is described in detail in conjunction with the specific examples. Of course, the present method for preparation of the low-chlorine epoxy resin is also applicable to epoxy resins other than bisphenol A epoxy resins.

In an extraction method, the removal of an impurity and purification of product is performed by extraction through the use of a difference in solubility, so the extraction method has the characteristics of low cost, simple operation, and high separation efficiency. However, because the solubility of an epoxy resin free of chlorine impurities and the solubility of an epoxy resin containing chlorine impurities is not much different, direct purification by extraction is unavailable, so there is no technology set forth in the prior art to remove chlorine impurities from an epoxy resin by the extraction method.

The present invention provides a method for removing chlorine impurities from an epoxy resin which involves using an extraction method.

In accordance with the principles of the method of the present invention, the difference in solubility between a low-chlorine bisphenol A epoxy resin and a bisphenol A epoxy resin containing chlorine impurities is increased first to improve the recognition of the two epoxy resins to an extraction solvent; and then impurity-removal and purification are performed by using the extraction method so as to achieve the purpose of separating the desired low-chlorine bisphenol A epoxy resin.

Fig. 1 is a diagram of a reaction principle of an aldol condensation reaction of a bisphenol A epoxy resin containing chlorine impurities and perfluorohexyl aldehyde as provided by an embodiment of the method of the present invention.

As shown in Fig. 1, a hydroxyl group in a bisphenol A epoxy resin (because an impurity chlorine in an epoxy resin containing chlorine impurities is often located at an end group, and a hydroxyl group on a carbon adjacent to an end group chlorine has good activity) and an aldehyde group in perfluorohexyl aldehyde undergo an aldol condensation reaction to obtain a reaction product, wherein the reaction product includes a fluorine-containing chlorinated product generated by the aldol condensation reaction of the bisphenol A epoxy resin containing chlorine impurities and polyfluoroalkyl aldehyde, and a bisphenol A epoxy resin free of chlorine impurities that does not react with perfluorohexyl aldehyde due to low hydroxyl activity.

Due to the greater difference in solubility of the fluorine-containing chlorinated product and the bisphenol A epoxy resin free of chlorine impurities, the purpose of separating these two may be achieved by the extraction method.

For the selection of an extraction agent, since perfluoroalkane is a non-polar molecule and has the characteristics of being both insoluble in oil and water, an perfluoroalkane is selected as the extraction agent: only the fluorine-containing chlorinated product can be dissolved in the perfluoroalkane to form an extract phase, and a low-chlorine bisphenol A epoxy resin of a bisphenol A epoxy resin free of chlorine impurities is a raffinate phase.

The extract phase and the raffinate phase are separated, that is, the purpose of separating the fluorine-containing chlorinated product from the bisphenol A epoxy resin free of chlorine impurities is achieved, and the low-chlorine bisphenol A epoxy resin is thereby obtained.

Upon testing, the total chlorine content of the low-chlorine bisphenol A epoxy resin extracted in accordance with the method of the present invention is lower than that of the bisphenol A epoxy resin before the aldol condensation reaction.

The present invention is further described below in conjunction with specific examples.

### Example 1

15.0 g of perfluorohexyl aldehyde is slowly added to 45.5 g of bisphenol A epoxy resin, and mixed homogeneously to obtain a mixture, and the mixture is dissolved in 63.5 g of cyclohexane solvent and reacted for 20 minutes.

Under an alkaline condition (that is, the pH of the reaction solution is greater than 7) and a reaction temperature of 30°C, perfluorohexyl aldehyde and the bisphenol A epoxy resin containing chlorine impurities undergo an aldol condensation reaction for 2 hours to obtain a reaction product.

Perfluorobutane is selected as the extraction agent and added to the reaction product, and extraction is performed. Because fluorine is a non-polar molecule and has the characteristics of being both insoluble in oil and water, only the fluorine-containing chlorinated product underlying the above-described reaction product can be dissolved in the perfluorobutane, and a low-chlorine bisphenol A epoxy resin is obtained after the fluorine-containing chlorinated product is removed therefrom.

### Example 2

23.1 g of perfluorohexyl aldehyde is slowly added to 73.6 g of bisphenol A epoxy resin, and mixed homogeneously to obtain a mixture, and the mixture is dissolved in 96.4 g of cyclohexane solvent and reacted for 20 minutes.

Under an alkaline condition (that is, the pH of the reaction solution is greater than 7) and a reaction temperature of 40°C, perfluorohexyl aldehyde and the bisphenol A epoxy resin containing chlorine impurities undergo an aldol condensation reaction for 3 hours to obtain a first reaction product.

Perfluorohexane is selected as the extraction agent and added to the first reaction product, and extraction is performed. Because fluorine is a non-polar molecule and has the characteristics of being both insoluble in oil and water, only the fluorine-containing chlorinated product underlying the above-described reaction product can be dissolved in the perfluorohexane, and a low-chlorine bisphenol A epoxy resin is obtained after the fluorine-containing chlorinated product is removed therefrom.

### Example 3

18.9 g of perfluorohexyl aldehyde is slowly added to 63.2 g of bisphenol A epoxy resin, and mixed homogeneously to obtain a mixture, and the mixture is dissolved in 89.6 g of cyclohexane solvent and reacted for 20 minutes.

Under an alkaline condition (that is, the pH of the reaction solution is greater than 7) and a reaction temperature of 35°C, perfluorohexyl aldehyde and the bisphenol A epoxy resin containing chlorine impurities undergo an aldol condensation reaction for 2 hours to obtain a first reaction product.

Perfluoropentane is selected as the extraction agent and added to the first reaction product, and extraction is performed. Because fluorine is a non-polar molecule and has the characteristics of being both insoluble in oil and water, only the fluorine-containing chlorinated product underlying the above-described reaction product can be dissolved in the perfluoropentane, and a low-chlorine bisphenol A epoxy resin is obtained after the fluorine-containing chlorinated product is removed therefrom.

### Example 4

21.6 g of perfluorohexyl aldehyde is slowly added to 75.5 g of bisphenol A epoxy resin, and mixed homogeneously to obtain a mixture, and the mixture is dissolved in 97.3 g of cyclohexane solvent and reacted for 20 minutes.

Under an alkaline condition (that is, the pH of the reaction solution is greater than 7) and a reaction temperature of 45°C, perfluorohexyl aldehyde and the bisphenol A epoxy resin containing chlorine impurities undergo an aldol condensation reaction for 3 hours to obtain a first reaction product.

Perfluorooctane is selected as the extraction agent and added to the first reaction product, and extraction is performed. Because fluorine is a non-polar molecule and has the characteristics of being both insoluble in oil and water, only the fluorine-containing chlorinated product underlying the above-described reaction product can be dissolved in the perfluorooctane, and a low-chlorine bisphenol A epoxy resin is obtained after the fluorine-containing chlorinated product is removed therefrom.

### Example 5

19.7 g of perfluorohexyl aldehyde is slowly added to 65.8 g of bisphenol A epoxy resin, and mixed homogeneously to obtain a mixture, and the mixture is dissolved in 85.4 g of cyclohexane solvent and reacted for 20 minutes.

Under an alkaline condition (that is, the pH of the reaction solution is greater than 7) and a reaction temperature of 30°C, perfluorohexyl aldehyde and the bisphenol A epoxy resin containing chlorine impurities undergo an aldol condensation reaction for 3 hours to obtain a first reaction product.

Perfluorohexane is selected as the extraction agent and added to the first reaction product, and extraction is performed. Because fluorine is a non-polar molecule and has the characteristics of being both insoluble in oil and water, only the fluorine-containing chlorinated product underlying the above-described reaction product can be dissolved in perfluorohexane, and a low-chlorine bisphenol A epoxy resin is obtained after a fluorine-containing chlorinated product is removed therefrom.

The chlorine content of the epoxy resins in Examples 1 to 5 was determined, and the results are shown in Table 1.

It can be seen from Table 1 that the method of the present invention can effectively remove chlorine impurities from the bisphenol A epoxy resin, and when the molar ratio of the perfluorohexyl aldehyde to the bisphenol A epoxy resin is 1:2.1, the reaction temperature is 40°C, and the aldol condensation reaction is carried out for 3 hours, the optimal removal effect of chlorine impurities is achieved.

**Table 1 Test results of chlorine content of epoxy resin in Examples 1 to 5**

| Items | Example 1 | Example 2 | Example 3 | Example 4 | Example 5 |
|---|---|---|---|---|---|
| Initial chlorine content/ppm | 932 | 1003 | 987 | 1135 | 914 |
| Final chlorine content/ppm | 134 | 32 | 42 | 50 | 34 |
| Removal rate/% | 85.7 | 96.8 | 95.8 | 95.2 | 96.35 |

A hydroxyl group in the bisphenol A epoxy resin containing chlorine impurities undergoes the aldol condensation reaction with an aldehyde group in the perfluorohexyl aldehyde to generate the fluorine-containing chlorinated product; further, due to the large difference in solubility between the fluorine-containing chlorinated product and the low-chlorine epoxy resin, a perfluoroalkane is selected as the extraction agent, only the fluorine-containing chlorinated product can be dissolved in the perfluoroalkane, and the extract phase is separated from the raffinate phase, so as to achieve the purpose of separating the fluorine-containing chlorinated product from the chlorine-free bisphenol A epoxy resin, thereby obtaining the low-chlorine bisphenol A epoxy resin.

The method of the present invention has the characteristics of low cost, easy operation and high separation efficiency. The chlorine content of the low-chlorine bisphenol A epoxy resin prepared in accordance with the method of the present invention is less than 150 ppm.

The above disclosure provides a detailed description of the method of the present invention, but the above-described specific embodiments of the present invention are not to be regarded as limiting the invention thereto: the scope of the present invention is commensurate with the definition thereof provided by the appended claims.

## Claims

1. A method for preparation of a low-chlorine epoxy resin, comprising:
performing an aldol condensation reaction of a bisphenol A epoxy resin containing chlorine impurities and a polyfluoroalkyl aldehyde under a first preset reaction condition to obtain a reaction product;
adding a perfluoroalkane solution to the reaction product for extraction, standing and then separating to obtain an extract phase and a raffinate phase, wherein the extract phase comprises a fluorine-containing chlorinated product generated by the aldol condensation reaction of the bisphenol A epoxy resin containing chlorine impurities and the polyfluoroalkyl aldehyde, and the raffinate phase comprises a low-chlorine bisphenol A epoxy resin; and
separating the extract phase from the raffinate phase, so as to achieve the purpose of separating the fluorine-containing chlorinated product from the chlorine-free bisphenol A epoxy resin, thereby obtaining the low-chlorine bisphenol A epoxy resin, wherein the chlorine content of the low-chlorine bisphenol A epoxy resin is lower than that of the bisphenol A epoxy resin before reaction.

2. The method for preparation of the low-chlorine epoxy resin according to claim 1, wherein the perfluoroalkane is perfluoropentane, perfluorohexane or perfluorooctane.

3. The method for preparation of the low-chlorine epoxy resin according to claim 1, wherein the polyfluoroalkyl aldehyde is perfluorohexyl aldehyde, or perfluorooctyl aldehyde.

4. The method for preparation of the low-chlorine epoxy resin according to claim 3, wherein the molar ratio of the bisphenol A epoxy resin to the polyfluoroalkyl aldehyde is 1: (2.1 to 2.3).

5. The method for preparation of the low-chlorine epoxy resin according to claim 1, wherein the first preset reaction condition comprises: a reaction temperature of 30°C to 45°C, a reaction time of 2 to 3 hours, and a pH of the reaction solution during the reaction process of greater than 7.

6. The method for preparation of the low-chlorine epoxy resin according to claim 1, wherein prior to the aldol condensation reaction of the bisphenol A epoxy resin containing chlorine impurities and the polyfluoroalkyl aldehyde, the method further comprises:
mixing the bisphenol A epoxy resin containing chlorine impurities with the polyfluoroalkyl aldehyde homogeneously, and dissolving the mixture in cyclohexane.

7. The method for preparation of the low-chlorine epoxy resin according to claim 3, wherein a reaction principle of the aldol condensation reaction of the bisphenol A epoxy resin containing chlorine impurities and the polyfluorohexyl aldehyde for providing the fluorine-containing chlorinated product is as follows:

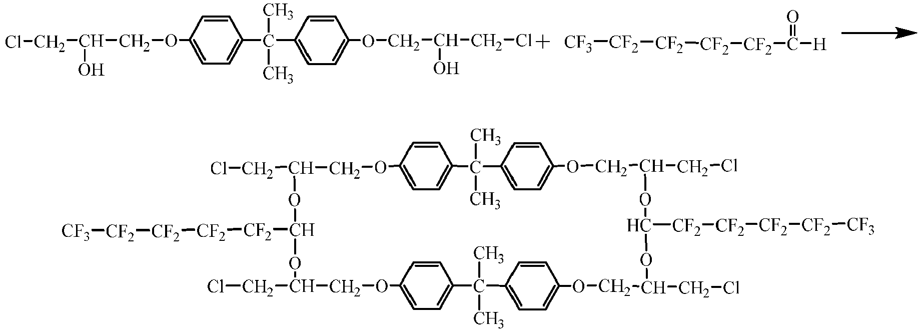

8. Use of the low-chlorine epoxy resin prepared in accordance with the method defined in any one of claims 1 to 7 in a copper-clad plate.

## Patentansprüche

1. Verfahren zur Herstellung eines chlorarmen Epoxidharzes, umfassend:
Durchführen einer Aldolkondensationsreaktion eines Bisphenol-A-Epoxidharzes, das Chlorverunreinigungen enthält, und eines Polyfluoralkylaldehyds unter einer ersten voreingestellten Reaktionsbedingung, um ein Reaktionsprodukt zu erhalten;
Zugeben einer Perfluoralkanlösung zu dem Reaktionsprodukt zur Abscheidung, Stehenlassen und anschließendes Trennen, um eine Extraktphase und eine Raffinatphase zu erhalten, wobei die Extraktphase ein fluorhaltiges chloriertes Produkt umfasst, das durch die Aldolkondensationsreaktion des Chlorverunreinigungen enthaltenden Bisphenol-A-Epoxidharzes und des Polyfluoralkylaldehyds erzeugt wird, und die Raffinatphase ein chlorarmes Bisphenol-A-Epoxidharz umfasst, und
Trennen der Extraktphase von der Raffinatphase, um den Zweck des Trennens des fluorhaltigen chlorierten Produkts von dem Bisphenol-A-Epoxidharz zu erreichen, dadurch Erhalten des chlorarmen Bisphenol-A-Epoxidharzes, wobei der Chlorgehalt des chlorarmen Bisphenol-A-Epoxidharzes niedriger ist als der des Bisphenol-A-Epoxidharzes vor der Reaktion.

2. Verfahren zur Herstellung des chlorarmen Epoxidharzes gemäß Anspruch 1, wobei das Perfluoralkan Perfluorpentan, Perfluorhexan oder Perfluoroctan ist.

3. Verfahren zur Herstellung des chlorarmen Epoxidharzes gemäß Anspruch 1, wobei das Polyfluoralkylaldehyd Perfluorhexylaldehyd, oder Perfluoroctylaldehyd ist.

4. Verfahren zur Herstellung des chlorarmen Epoxidharzes gemäß Anspruch 3, wobei das Molverhältnis des Bisphenol-A-Epoxidharzes zu dem Polyfluoralkylaldehyd 1: (2.1 bis 2.3.) ist.

5. Verfahren zur Herstellung des chlorarmen Epoxidharzes gemäß Anspruch 1, wobei die erste voreingestellte Reaktionsbedingung umfasst: eine Reaktionstemperatur von 30 °C bis 45 °C, eine Reaktionszeit von 2 bis 3 Stunden, und einen pH der Reaktionslösung während des Reaktionsprozesses von mehr als 7.

6. Verfahren zur Herstellung des chlorarmen Epoxidharzes gemäß Anspruch 1, wobei das Verfahren vor der Aldolkondensationsreaktion des Chlorverunreinigungen enthaltenden Bisphenol-A-Epoxidharzes und des Polyfluoralkylaldehyds ferner umfasst:
Mischen des Chlorverunreinigungen enthaltenden Bisphenol-A-Epoxidharzes homogen mit dem Polyfluoralkylaldehyd, und Auflösen des Gemisches in Cyclohexan.

7. Verfahren zur Herstellung des chlorarmen Epoxidharzes gemäß Anspruch 3, wobei ein Reaktionsprinzip der Aldolkondensationsreaktion des Chlorverunreinigungen enthaltenden Bisphenol-A-Epoxidharzes und des Polyfluorhexylaldehyds zum Bereitstellen des fluorhaltigen chlorierten Produkts wie folgt ist:

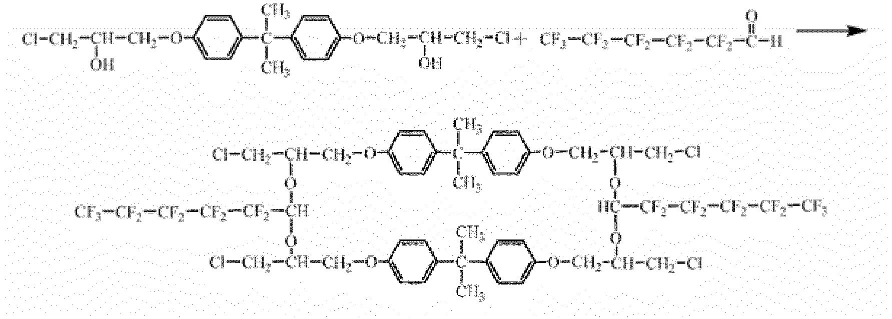

8. Verwendung des chlorarmen Epoxidharzes, hergestellt nach dem Verfahren, definiert in einem der Ansprüche 1 bis 7, in einer kupferkaschierten Platte.

## Revendications

1. Procédé pour la préparation d'une résine époxy à faible teneur en chlore, comprenant :
la mise en oeuvre d'une réaction de condensation d'aldol d'une résine époxy à base de bisphénol A contenant des impuretés chlorées et d'un polyfluoroalkyl-aldéhyde dans des premières conditions réactionnelles préétablies pour que soit obtenu un produit réactionnel ;
l'addition d'une solution de perfluoroalcane au produit réactionnel à des fins d'extraction, un maintien au repos et ensuite une séparation pour que soient obtenues une phase d'extrait et une phase de raffinat, parmi lesquelles la phase d'extrait comprend un produit chloré contenant du fluor généré par la réaction de condensation d'aldol de la résine époxy à base de bisphénol A contenant des impuretés chlorées et du polyfluoroalkyl-aldéhyde, et la phase de raffinat comprend une résine époxy de bisphénol A à faible teneur en chlore ; et
la séparation de la phase d'extrait d'avec la phase de raffinat, de façon que soit atteint l'objectif de séparation du produit chloré contenant du fluor d'avec la résine époxy à base de bisphénol A sans chlore, ce qui donne ainsi la résine époxy à base de bisphénol A à faible teneur en chlore,
dans lequel la teneur en chlore de la résine époxy à base de bisphénol A à faible teneur en chlore est inférieure à celle de la résine époxy à base de bisphénol A avant la réaction.

2. Procédé pour la préparation d'une résine époxy à faible teneur en chlore selon la revendication 1, dans lequel le perfluoroalcane est le perfluoropentane, le perfluorohexane ou le perfluorooctane.

3. Procédé pour la préparation d'une résine époxy à faible teneur en chlore selon la revendication 1, dans lequel le polyfluoroalkyl-aldéhyde est le perfluorohexyl-aldéhyde ou le perfluorooctyl-aldéhyde.

4. Procédé pour la préparation d'une résine époxy à faible teneur en chlore selon la revendication 3, dans lequel le rapport molaire de la résine époxy à base de bisphénol A au polyfluoroalkyl-aldéhyde est de 1/(2,1 à 2,3).

5. Procédé pour la préparation d'une résine époxy à faible teneur en chlore selon la revendication 1, dans lequel les premières conditions réactionnelles préétablies comprennent : une température réactionnelle de 30°C à 45°C, un temps de réaction de 2 à 3 heures, et un pH de la solution réactionnelle durant le procédé réactionnel supérieur à 7.

6. Procédé pour la préparation d'une résine époxy à faible teneur en chlore selon la revendication 1, lequel procédé, avant la réaction de condensation d'aldol de la résine époxy à base de bisphénol A contenant des impuretés chlorées et du polyfluoroalkyl-aldéhyde, comprend en outre :
le mélange homogène de la résine époxy à base de bisphénol A contenant des impuretés chlorées avec le polyfluoroalkyl-aldéhyde, et la dissolution du mélange dans du cyclohexane.

7. Procédé pour la préparation d'une résine époxy à faible teneur en chlore selon la revendication 3, dans lequel le principe réactionnel de la réaction de condensation d'aldol de la résine époxy à base de bisphénol A contenant des impuretés chlorées et du polyfluoroalkyl-aldéhyde pour donner le produit chloré contenant du fluor est le suivant :

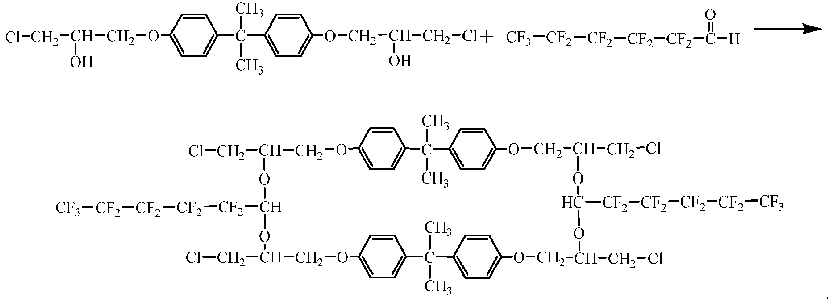

8. Utilisation de la résine époxy à faible teneur en chlore préparée conformément au procédé défini dans l'une quelconque des revendications 1 à 7 dans une plaque recouverte de cuivre.
